# EUROPÄISCHE PATENTANMELDUNG

(11) **EP 4 556 376 A1**
(43) Veröffentlichungstag der Anmeldung: **21.05.2025**
(21) Anmeldenummer: 24212327.1
(22) Anmeldetag: 12.11.2024
(51) Int. Cl.: B64F 1/36

(54) **VORRICHTUNG, SCHALTER UND VERFAHREN ZUR AUFGABE EINES SONDERGEPÄCKSTÜCKS**

(30) Priorität: 20.11.2023 DE 102023132203
(71) Anmelder: Fraport AG Frankfurt Airport Services Worldwide, 60547 Frankfurt am Main (DE)
(72) Erfinder: Blanco, Juan, 61137 Schöneck (DE); Müller, Markus, 63654 Büdingen (DE)
(74) Vertreter: Herrmann, Daniel

(57) **Zusammenfassung**

Beschrieben wird eine Vorrichtung (20) zur Aufgabe eines Gepäckstücks (14), insbesondere eines Sondergepäckstücks (14), von Passagieren, die Vorrichtung (20) umfassend: einen Behälter (6), der Behälter (6) umfassend: einen Rahmen (13), der Seitenwände (7) des Behälters (6) bildet; und einen Transportbehälter (1), der ausgelegt ist, einen Boden des Behälters (6) zu bilden, wobei die durch den Rahmen (13) gebildeten Seitenwände (7) des Behälters (6) und der Transportbehälter (1) in einem Beladezustand des Behälters (6) einen Innenraum des Behälters (6) zur Aufnahme des Gepäckstücks (14) abgrenzen; wobei der Behälter (6) von dem Beladezustand in einen Entladezustand überführbar ist, in dem das Gepäckstück (14) mittels des Transportbehälters aus dem Behälter (6) entladbar ist; wobei der Behälter (6) in dem Beladezustand derart ausgelegt ist, dass sich ein oberer Rand (1a) des Transportbehälters (1) an einen unteren Rand (13a) des Rahmens (13) anschließt. Beschrieben wird ferner ein Gepäckaufgabeschalter (100) und ein Verfahren zur Aufgabe eines Gepäckstücks, insbesondere eines Sondergepäckstücks.

## Beschreibung

### TECHNISCHES GEBIET

Die Erfindung betrifft eine Vorrichtung, einen Schalter und ein Verfahren zur Aufgabe eines Gepäckstücks, insbesondere eines Sondergepäckstücks, eines Passagiers.

### HINTERGRUND DER ERFINDUNG

Vorrichtungen zur Aufgabe eines Gepäckstücks sind aus der EP 3169589 bekannt. Darin befindet sich auch in den Figuren 23 bis 25 ein einen Transportbehälter umfassenden Behälter zur Aufgabe von Sondergepäckstücken. Danach bildet der Transportbehälter ausschließlich den Boden des Behälters und umgreift die Seitenwände des Mittelteils des Behälters in dessen Beladezustand.

### KURZBESCHREIBUNG DER ERFINDUNG

Die Erfinder haben erkannt, dass bei dem aus dem Stand der Technik bekannten Behälter das maximale Aufnahmevermögen des Behälters für das Gepäckstück ausschließlich durch die Seitenwände des Mittelteils und durch die Abdeckung des Behälters gegeben ist und dadurch der gesamte Aufbau, insbesondere die Höhe, des Behälters zur Bereitstellung dieses Aufnahmevermögens recht groß dimensioniert werden muss. Ferner haben die Erfinder erkannt, dass in horizontaler Richtung der Transportbehälter eine größere Ausdehnung aufweist als der Innenraum des Mittelteils des Behälters und somit auch in horizontaler Richtung die gesamte Vorrichtung einen recht großen Querschnitt bzw. Fußabdruck aufweist. Damit verbunden haben die Erfinder auch erkannt, dass das Gepäckstück während des Abtransports aus dem Behälter in den Transportbehälter umherrutschen kann, da der Transportbehälter in horizontaler Richtung eine größere Ausdehnung aufweist als der Innenraum des Mittelteils des Behälters. Die Erfinder haben erkannt, dass dadurch das Gepäckstück sich ggf. sogar während des Transports in dem Transportbehälter aufstellen und zumindest teilweise aus dem Transportbehälter hervorstehen oder gar rausfallen kann, was den Abtransport negativ beeinträchtigen oder gar Stilllegen kann.

Ausgehend von dem eingangs genannten Stand der Technik liegt der Erfindung daher die Aufgabe zugrunde, eine kompaktere Vorrichtung zur Aufgabe eines Gepäckstücks bereitzustellen.

Die Erfindung löst diese Aufgabe mit einer Vorrichtung mit den Merkmalen des Patentanspruchs 1, mit einem Gepäcksaufgabeschalter mit den Merkmalen des Patentanspruchs 14 und einem Verfahren zur Aufgabe eines Gepäckstücks mit den Merkmalen des Patentanspruchs 15. Einige der bevorzugten Ausführungsformen sind in den abhängigen Ansprüchen, in der Beschreibung und in den Figuren beschrieben.

Entsprechend der erfindungsgemäßen Lösung wird eine Vorrichtung zur Aufgabe eines Gepäckstücks, insbesondere eines Sonder-Gepäckstücks, von Passagieren, vorgeschlagen, die Vorrichtung umfassend: einen Behälter, der Behälter umfassend: einen Rahmen, der Seitenwände des Behälters bildet; und einen Transportbehälter, der ausgelegt ist, einen Boden des Behälters zu bilden, wobei die durch den Rahmen gebildeten Seitenwände des Behälters und der Transportbehälter in einem Beladezustand des Behälters einen Innenraum (6) des Behälters zur Aufnahme des Gepäckstücks abgrenzen; wobei der Behälter von dem Beladezustand in einen Entladezustand überführbar ist, in dem das Gepäckstück mittels des Transportbehälters aus dem Behälter entladbar ist; und wobei der Behälter in dem Beladezustand derart ausgelegt ist, dass sich ein oberer Rand des Transportbehälters an einen unteren Rand des Rahmens (z.B. der untere Rand der Seitenwände des Rahmens) anschließt.

Dadurch, dass der Behälter in dem Beladezustand derart ausgelegt ist, dass sich ein oberer Rand des Transportbehälters an einen unteren Rand des Rahmens anschließt, trägt das Aufnahmevermögen des Transportbehälters zum maximal Aufnahmevermögen des Behälters bei und der Rahmen kann kompakter, insbesondere weniger hoch, ausgestaltet werden. Ferner kann dadurch in horizontaler Richtung der Querschnitt bzw. Fußabdruck des Behälters reduziert werden. All dies trägt zu einer kompakteren Bauweise der Vorrichtung bei.

Bevorzugt kann sich in dem Beladezustand der obere Rand des Transportbehälters derart an den unteren Rand des Rahmens anschließen, dass der obere Rand des Transportbehälters in dem Beladezustand in der Nähe des unteren Rands des Rahmens bzw. des unteren Rands der Seitenflächen des Rands ist. Beispielsweise kann der obere Rand des Transportbehälters im Beladezustand den unteren Rand des Rahmens berühren oder mittels eines (kleinen) Spalts von diesem beabstandet sein. Zum Beispiel kann die Dicke des Spalts kleiner sein als die Dicke eines elastisches Elements, das an dem unteren Rand des Rahmens vorliegt. Bevorzugt gehen die Seitenwände des Rahmens nahtlos oder im wesentlichen nahtlos in die Seitenwände des Transportbehälters über. Alternativ oder zusätzlich zur Anordnung der Rände in der Nähe kann der obere Rand des Transportbehälters in dem Beladezustand an den unteren Rand des Rahmens bzw. dessen Seitenflächen anschlagen, beispielsweise an ein bzw. das elastische(s) Element, das an dem unteren Rand des Rahmens vorliegt. Zum Beispiel kann dieses Anschlagen während der gesamten Dauer des Beladezustands anhalten oder aber nur teilweise während der Dauer des Beladezustands erfolgen, z. B. bevor der Spalt gebildet wird. Diese weiteren Aspekte führen einzeln und in Kombination zu einer noch kompakteren Bauweise der Vorrichtung.

Ein elastisches Element, wie z.B. das oben ausgeführte elastische Element, etwa ein Dichtungselement, kann im Bereich des unteren Rand des Rahmens einen vorgegebenen Abstand zwischen oberen Rand das Transportbehälters und unteren Rand des Rahmens im Beladungszustand definieren bzw. Beschädigungen von Rahmen und Transportbehälter vermeiden. Auch kann ein solches elastisches Element sicherstellen, dass keine, ggf. unerwünschten, Spalte zwischen dem unteren Rand des Rahmens und dem oberen Rand des Transportbehälters im Beladungszustand vorliegen, wodurch andernfalls kleinere Gegenstände an den Transportbehälter vorbei rutschen könnten.

Bevorzugt kann sich in dem Beladezustand der obere Rand des Transportbehälters derart an den unteren Rand des Rahmens anschließen, dass eine Oberfläche (z.B. obere Stirnfläche) des oberen Rands des Transportbehälters einer Oberfläche (z.B. unteren Stirnfläche) des unteren Rands des Rahmens bzw. dessen Seitenflächen gegenüber liegt, was zu einer besonders kompakteren Bauweise der Vorrichtung führt.

Gemäß eines bevorzugten Aspekts der Erfindung ist der Behälter in dem Beladezustand derart ausgelegt, dass eine maximale Länge und/oder Breite des durch den Innenraum aufnehmbaren Gepäckstücks zumindest durch ein oder mehrere Seitenwände des Transportbehälters definiert werden. Dadurch wird sichergestellt, dass das in den Transportbehälter aufgenommene Gepäck während des Abtransports nicht umherrutschen kann und somit der Abtransport verlässlicher durchgeführt werden kann.

Bevorzugt wird die maximale Länge und/oder Breite des durch den Innenraum aufnehmbaren Gepäckstücks auch durch ein oder mehrere der durch den Rahmen gebildeten Seitenwände des Behälters begrenzt, so dass der Rahmen wie eine Schleuse für den Transportbehälter wirkt: Der Rahmen dient einer Vorselektion von zu großen Gepäckstücken. Die Begrenzungen von Länge und Breite durch die Seitenwände des Transportbehälters können durch die Seitenwände des Rahmens fortgeführt werden.

Gemäß eines bevorzugten Aspekts der Erfindung umfasst die Vorrichtung eine mit dem Behälter verbundene Abdeckung des Behälters, wobei die Abdeckung ausgelegt ist, zwischen einer den Innenraum zugänglich machenden geöffneten Stellung und einer den Innenraum blockierenden geschlossen Stellung zu wechseln. Die Vorrichtung kann ausgelegt sein, die Abdeckung in der geschlossenen Stellung zu arretieren. Dies beides ermöglicht den Innenraum des Behälters außerhalb des Betriebs zu schützen. Die Abdeckung kein eine Klappe, eine Tür, ein Schieber oder ein Rollladen sein, oder auch in einer anderen Form ausgestaltet sein.

Bevorzugt sind in der Abdeckung eine oder mehrere Bildaufnahmeeinheiten (z.B. Kamera oder Scanner) angebracht oder integriert, die ausgelegt sind, bei einer zumindest teilweise geöffneten Stellung der Abdeckung des Behälters, eine an dem Gepäckstück angebrachte Kennung auszulesen. Die Anbringung der Bildaufnahmeeinheiten in der Abdeckung hat den Vorteil eines umfassenderen Blickfeldes für die Bildaufnahmeeinheiten und damit einer verlässlicheren Auslesung der Kennung eines ggf. verschiedentlich im Innenraum des Behälters anordbaren Gepäckstücks. Auch kann die Kennung an verschiedenen Stellen des Gepäcks angebracht sein. Dies Anordnung der Bildaufnahmeeinheiten sind deshalb besonders vorteilhaft für eine automatische Erfassung einer Kennung z.B. an einem Gepäckstückanhänger.

Die Abdeckung kann ausgelegt sein, in jeder Stellung von bzw. zwischen der geöffneten Stellung und bzw. bis zu der geschlossenen Stellung durch mindestens ein Gegengewicht derart in sich selbst austariert zu sein, dass die Abdeckung in der Stellung nicht selbständig öffnen oder schließen kann. Die Abdeckung und/oder der Rahmen kann ein oder mehrere Mittel aufweisen, die ausgelegt sind, ein Quetschen eines Fingers eines Passagiers in der geschlossenen Stellung der Abdeckung zu vermeiden. Die ein oder mehrere Mittel umfassen ein an der Abdeckung angebrachtes elastisches Mittel (z.B. mindestens 20 mm, 30 mm, oder 40 mm dick), vorzugsweise eine (Gummi-)Dichtung, und/oder ein an dem Rahmen angebrachter Gegenanschlag für die Abdeckung. Optional kann das elastische Mittel bzw. die Dichtung durch einen Berührungschutz ersetzt werden. Der Gegenanschlag kann ausgelegt sein, in der geschlossenen Stellung der Abdeckung gegen die Abdeckung anzuschlagen und dadurch einen vorbestimmten Mindestabstand (z.B. mindestens 20 mm, 30 mm, oder 40 mm) zwischen der Abdeckung und einem oberen Rand des Rahmens herzustellen. Das elastische Mittel an der Abdeckung kann ausgelegt sein, in der geschlossenen Stellung der Abdeckung einen Spalt (z.B. Spalt mit mindestens 20 mm, 30 mm, oder 40 mm Dicke) zwischen der Abdeckung und einem oberen Rand des Rahmens zumindest teilweise oder vollständig auszufüllen. Der Spalt kann durch den vorbestimmten Mindestabstand gegeben sein.

Die Vorrichtung kann ferner einen Sensor (z.B. Kraftsensor oder Lichtschranken) umfassen, der ausgelegt ist, während eines Vorgangs zum Wechseln der Abdeckung von der geöffneten Stellung in die geschlossene Stellung einen Widerstand zu detektieren, um dadurch den Vorgang zu blockieren oder zu unterbrechen. Dieser Aspekte können einzeln und in Kombination einen verbesserten Schutz für den Passagier oder das Bedienpersonal der Vorrichtung bieten.

Bevorzugt kann die Vorrichtung ein Gehäuse umfassen und der Transportbehälter kann in dem Beladezustand des Behälters zumindest teilweise oder vollständig von dem Gehäuse der Vorrichtung umschlossen sein. Die oben dargelegten Mittel zur kompakteren Bauweise der Vorrichtung, insbesondere das aneinander Anschließen des oben Rands des Transportbehälters und des unteren Randes des Rahmens im Beladezustand, erlauben die Integration des Transportbehälters in das Gehäuse der Vorrichtung und damit einen Schutz des Transportbehälters.

Der Transportbehälter kann in dem Beladezustand des Behälters ausgelegt sein, in einer vorbestimmten Position zu arretieren in der der oberer Rand des Transportbehälters an dem unteren Rand des Rahmens des Behälters anschließt, was eine definierte Position des Transportbehälters im Beladezustand des Behälters schafft und somit den Beladevorgang verlässlicher ausgestaltet.

Die Vorrichtung kann ferner einen Sensor umfassen, der ausgelegt ist, ein Gewicht des in den Innenraum eingebrachten und durch den Transportbehälter getragenen Gepäckstücks zu bestimmen, um einen Abtransport eines zu schweren Gepäckstücks im Transportbehälter zu vermeiden.

Der Behälter kann in dem Beladezustand derart ausgelegt sein, dass eine maximale Höhe des durch den Innenraum aufnehmbaren Gepäckstücks zumindest durch die Abdeckung begrenzt wird, um für den Abtransport zu hohes Gepäck in dem Transportbehälter zu vermeiden.

Bevorzugt ist Abdeckung ausschließlich dann in die geschlossene Stellung überführbar, wenn das durch den Innenraum aufgenommene Gepäckstück die durch Abdeckung und den Behälter begrenzte maximale Höhe, maximale Länge und maximale Breite jeweils unterschreitet. Dies gibt dem Bedienpersonal bzw. den Passagier eine Rückmeldung darüber, ob das Ablegen des Gepäcks in der Behälter korrekt verlaufen ist bzw. ob die Maße des Gepäckstücks zulässig sind.

Gemäß eines bevorzugten Aspekts der Erfindung, ist ausschließlich bei geschlossener und/oder arretierter Stellung der Abdeckung der Behälter von dem Beladezustand in den Entladezustand überführbar, in dem das Gepäckstück automatisch und vorzugsweise für einen Passagier unzugänglich durch den Transportbehälter aus dem Behälter entladbar ist. Dadurch wird sichergestellt, dass ausschließlich Gepäck in den Transportbehälter abtransportiert wird, das zulässig angeordnet ist und zulässige Masse aufweist, die Abdeckung kann somit sowohl mechanische Höhenkontrolle als auch gleichzeitig ein Sicherheitselement in einem sein.

Ferner kann die Abdeckung auch als Manipulationsschutz gegenüber der Maschine und dem Prozess dienen, insbesondere dann, wenn nach dem Verschließen bzw. Arretieren der Abdeckung ein Gewicht des in dem Transportbehälter aufgenommenen Gepäckstücks (nochmals) mittels des Sensors gemessen bzw. abgeglichen wird.

Nachdem das Gepäckstück in den Transportbehälter aufgenommen wurde und eine Freigabe für den Wechsel des Behälters von dem Beladezustand in den Entladezustand von der Vorrichtung detektiert wurde, kann ein Lift betätigt werden, der den Transportbehälter samt Gepäckstück abtransportiert, beispielsweise einem Förderband zugeführt. Der Transportbehälter und der Lift können vorzugsweise erst dann zum Abtransport betätigt werden, wenn die Abdeckung verschlossen und ggf. arretiert ist. Das Transportband kann das Gepäck, mit oder ohne Transportbehälter, in Richtung Flugzeug transportieren. Der Vorrichtung kann entweder derselbe oder ein gleicher Transportbehälter für die erneute Aufgabe von Gepäckstücken zugeführt werden und der Kreislauf kann von vorne beginnen.

Entsprechend der erfindungsgemäßen Lösung wird ferner ein Gepäckaufgabeschalter, insbesondere zur Selbstbedienung, bereitgestellt, umfassend: irgendeine der erfindungsgemäßen Vorrichtungen; und ein durch Bedienpersonal oder einen Passagier bedienbares Endgerät zur Steuerung der Vorrichtung. Die Steuerung kann die Entriegelung und/oder und/oder das Öffnen und/oder das Schließen der Abdeckung umfassen. Die Steuerung kann alternativ oder zusätzlich die Eingabe von Passagierdaten umfassen.

Entsprechend der erfindungsgemäßen Lösung wird ferner ein Verfahren zur Aufgabe eines Gepäckstücks, insbesondere eines Sondergepäckstücks, eines Passagiers, insbesondere an einem Flughafen, unter Verwendung irgendeiner der erfindungsgemäßen Vorrichtungen, vorgeschlagen, das Verfahren umfassend: Aufnehmen des Gepäckstücks in dem Innenraum des Behälters im Beladezustand des Behälters; in Reaktion auf ein Detektieren eines Freigabesignals, Überführen des Behälters von dem Beladezustand in den Entladezustand, in dem sich der obere Rand des Transportbehälters von dem unteren Rand des Rahmens entfernt und das Gepäckstück mittels des Transportbehälters aus dem Behälter entladen wird.

Durch die hier beschriebenen Mitteln einzeln und in Kombination können Mittel bereitgestellt werden, die eine kompaktere Vorrichtung zur Gepäckaufgabe ermöglichen und zudem einen verlässlicheren Abtransport des Gepäckstücks in dem Transportbehälter ermöglichen.

Sofern diese Kurzbeschreibung der Erfindung Merkmale beschreibt, die nicht in den Patentansprüchen aufgeführt sind, so stellen diese Merkmale keine wesentlichen Merkmale in dem Sinne dar, dass diese Merkmale zwangsläufig zur Beschreibung der Erfindung in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZBESCHREIBUNG DER FIGUREN

Figur 1A zeigt einen erfindungsgemäßen Gepäckaufgabeschalter von außen in dreidimensionaler Darstellung.
Figur 1B zeigt einen erfindungsgemäßen Gepäckaufgabeschalter mit teilweise geöffnetem Gehäuse in dreidimensionaler Darstellung.
Figur 2 zeigt einen erfindungsgemäßen Gepäckaufgabeschalter mit geöffneter Abdeckung in dreidimensionaler Darstellung, in den kein Gepäckstück eingebracht wurde.
Figur 3 zeigt den Innenraum des Behälters einer erfindungsgemäßen Vorrichtung in einer schrägen Draufsicht.
Figur 4 zeigt den Behälter einer erfindungsgemäßen Vorrichtung im Querschnitt.
Figur 5 zeigt eine Abdeckung einer erfindungsgemäßen Vorrichtung.
Figur 6A zeigt einen erfindungsgemäßen Gepäckaufgabeschalter mit geöffneter Abdeckung in dreidimensionaler Darstellung, in dem ein Gepäckstück eingebracht wurde.
Figur 6B zeigt die erfindungsgemäße Vorrichtung aus Fig. 6A mit schließender Abdeckung.
Figur 7 zeigt einen Querschnitt durch eine erfindungsgemäße Vorrichtung im mit einem Gepäckstück beladenen Zustand und mit geschlossener und ggf. arretierter Abdeckung.

Bauteile, die in mehreren Figuren dargestellt sind, tragen dieselben Referenzzeichen.

### DETAILLIERTE BESCHREIBUNG

Die Erfindung betrifft eine Vorrichtung 20, einen Schalter 100 und ein Verfahren zur Aufgabe eines Gepäckstücks 14, insbesondere eines Sondergepäckstücks 14, eines Passagiers.

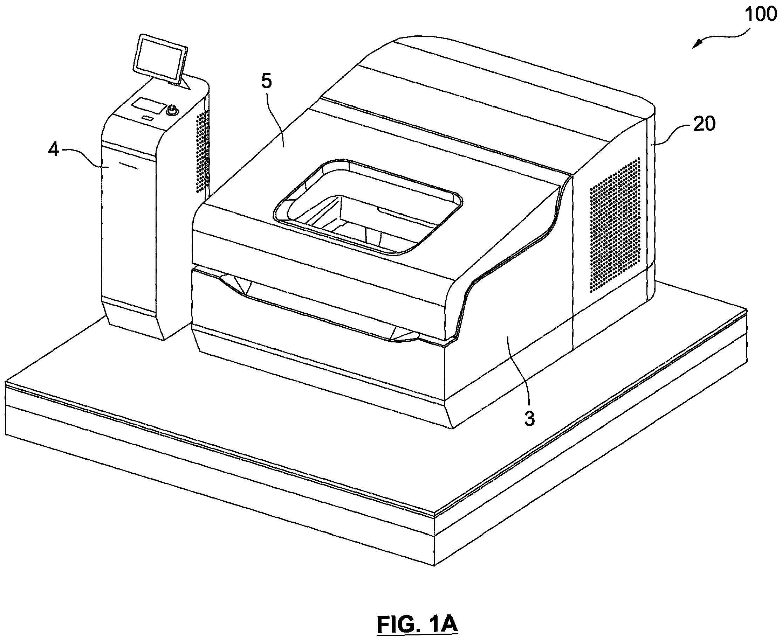

Figur 1A zeigt einen erfindungsgemäßen Gepäckaufgabeschalter 100 von außen in dreidimensionaler Darstellung.

Der Gepäckaufgabeschalter 100 umfasst die erfindungsgemäße Vorrichtung 20 und ein durch Bedienpersonal oder einen Passagier bedienbares Endgerät 4 zur Steuerung der Vorrichtung 20, insbesondere zur Steuerung der Abdeckung 5. Die Vorrichtung hat ein Gehäuse 3, das den im folgenden beschriebenen Behälter 6 der Vorrichtung 20, und gegebenenfalls weitere Komponenten der Vorrichtung 20, zumindest teilweise umschließt.

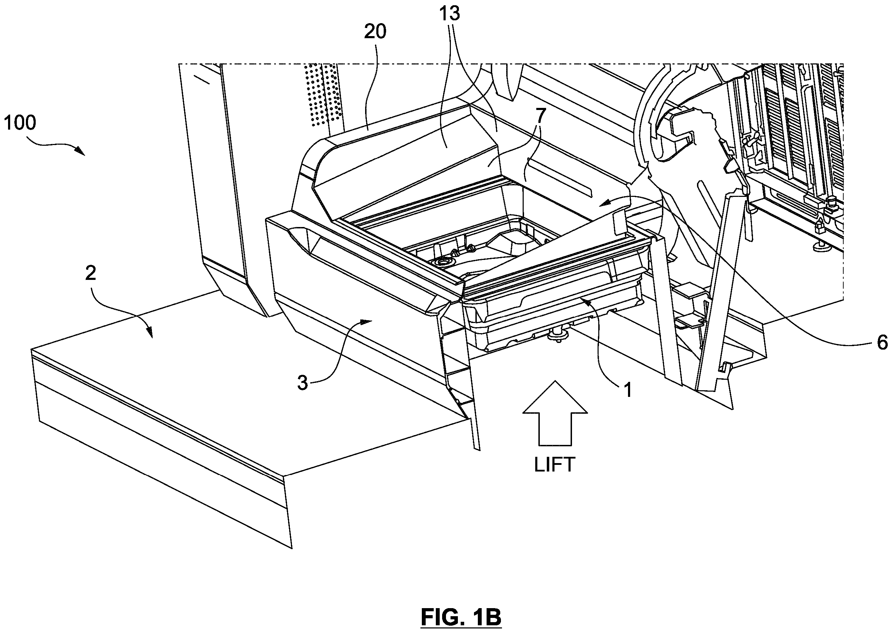

Figur 1B zeigt den erfindungsgemäßen Gepäckaufgabeschalter 100 mit teilweise geöffnetem Gehäuse 3 in dreidimensionaler Darstellung.

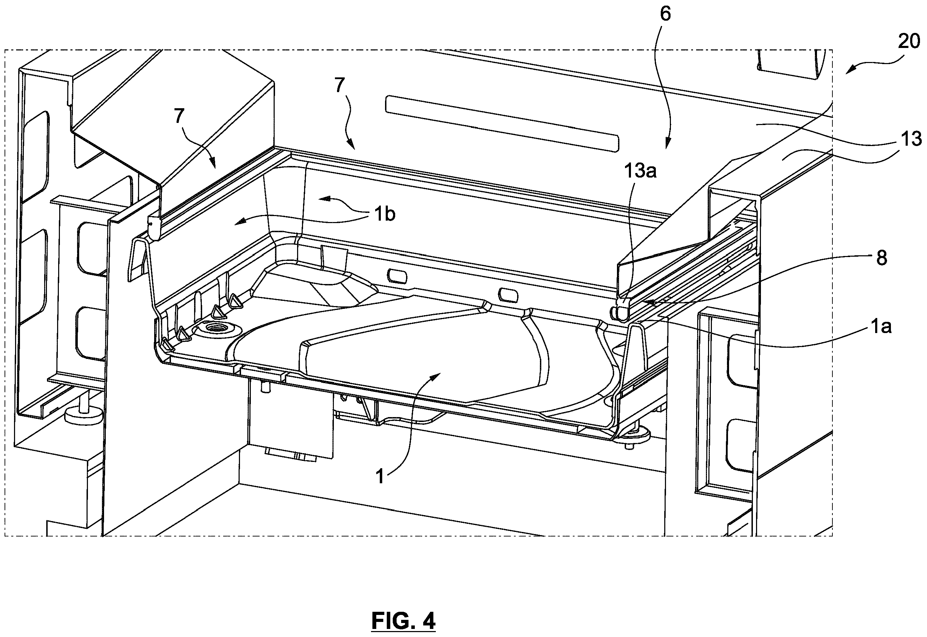

Die Vorrichtung 20 umfasst einen Behälter 6, der Behälter 6 umfassend: einen Rahmen 13, der (z.B. in zwei, vier oder mehr) Seitenwände 7 des Behälters 6 bildet; und einen Transportbehälter 1, der ausgelegt ist, einen Boden des Behälters 6 zu bilden, wobei die durch den Rahmen 13 gebildeten Seitenwände 7 des Behälters 6 und der Transportbehälter 1 in einem Beladezustand des Behälters einen Innenraum des Behälters 6 zur Aufnahme des Gepäckstücks 14 abgrenzen; wobei der Behälter 6 von einen Entladezustand in den Beladezustand überführbar ist, in dem ein Lift den Transportbehälter 1 in die Vorrichtung 20 in eine vorbestimmte Position bringt in der der Transportbehälter 1 den Boden des Behälters 6 bildet. Der Behälter 6 ist in dem Beladezustand derart ausgelegt, dass sich ein oberer Rand (vgl. 1a in Fig. 4) des Transportbehälters 1 an einen unteren Rand (vgl. 13a in Fig. 4) des Rahmens 13 anschließt.

Das Gepäckstück 14 ist mittels des Transportbehälters 1 aus dem Behälter 6 entladbar, in dem der Behälter 6 von dem Beladezustand wieder in den Entladezustand überführt wird in dem der Lift den Transportbehälter 1 mit dem darin liegenden Gepäckstück 14 abtransportiert.

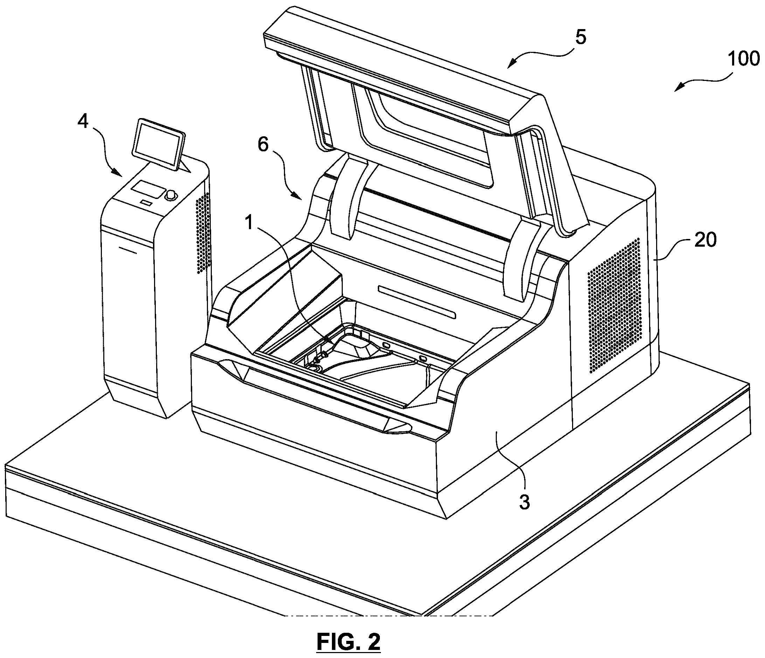

Figur 2 zeigt einen erfindungsgemäßen Gepäckaufgabeschalter 100 mit geöffneter Abdeckung 5 in dreidimensionaler Darstellung, mit den kein Gepäckstück eingebracht wurde.

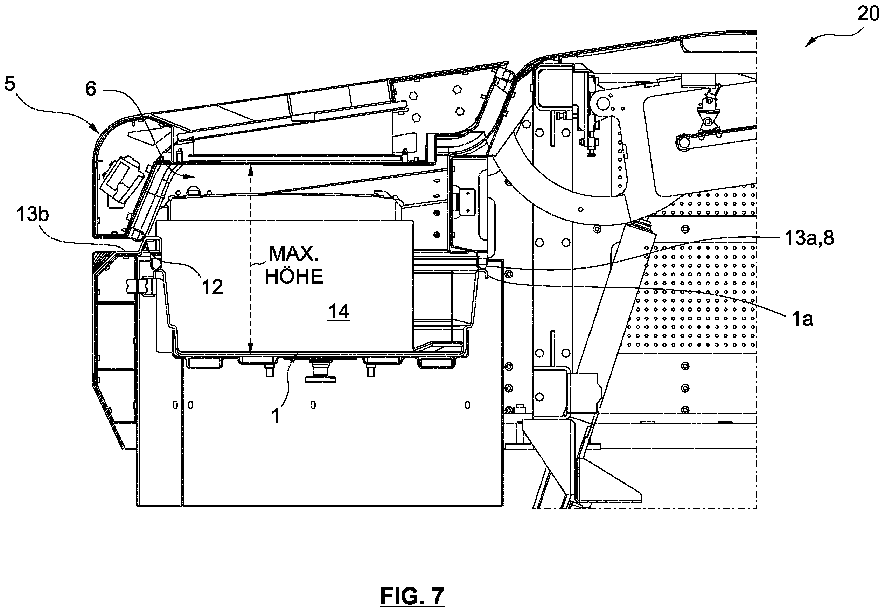

Die Vorrichtung 20 umfasst eine mit dem Behälter 6 verbundene Abdeckung 5 des Behälters 6, wobei die Abdeckung 5 ausgelegt ist, zwischen einer den Innenraum zugänglich machenden geöffneten Stellung (vgl. Fig. 2) und einer den Innenraum blockierenden geschlossen Stellung (vgl. Fig. 7) zu wechseln.

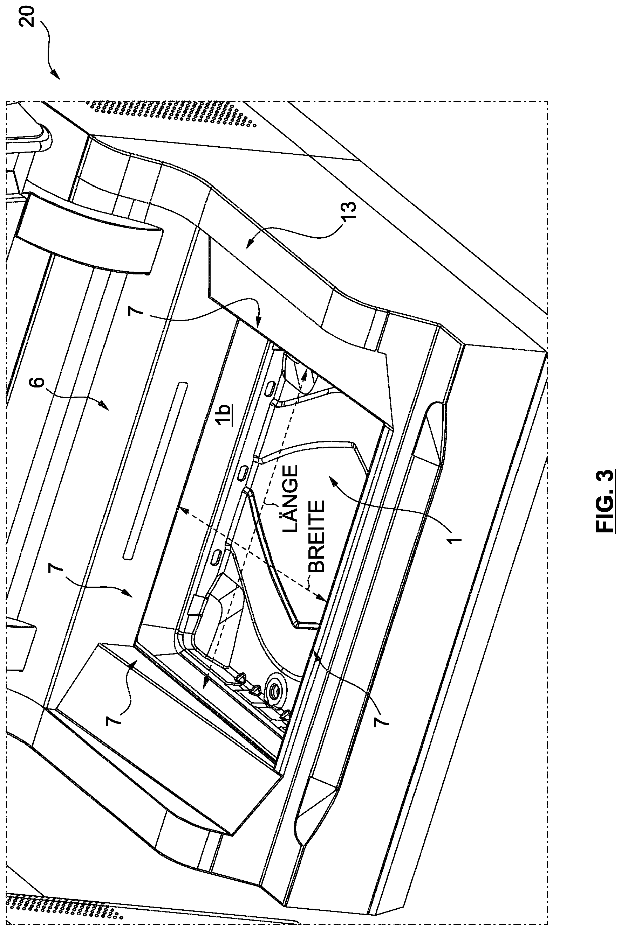

Figur 3 zeigt den Innenraum des Behälters 6 einer erfindungsgemäßen Vorrichtung 20 in einer schrägen Draufsicht.

Der Behälter 6 ist in dem Beladezustand derart ausgelegt, dass eine maximale Länge und/oder Breite des durch den Innenraum aufnehmbaren Gepäckstücks 14 zumindest durch ein oder mehrere Seitenwände 1b des Transportbehälters 1 definiert werden. Alternativ oder zusätzlich ist der Behälter 6 ferner in dem Beladezustand derart ausgelegt, dass die maximale Länge und/oder Breite des durch den Innenraum aufnehmbaren Gepäckstücks 14 durch ein oder mehrere der durch den Rahmen 13 gebildeten Seitenwände 7 des Behälters 6 begrenzt oder definiert werden.

Figur 4 zeigt den Behälter 6 einer erfindungsgemäßen Vorrichtung 20 im Querschnitt.

Der Behälter 6 ist in dem hier gezeigten Beispiel des Beladezustands derart ausgelegt, dass sich ein oberer Rand 1a des Transportbehälters 1 an einen unteren Rand 13a des Rahmens 13 anschließt. In diesem beispielhaften Beladezustand schließt sich der obere Rand 1a des Transportbehälter 1 derart an den unteren Rand 13a des Rahmens 13 an, dass der obere Rand 1a des Transportbehälters 1 in der Nähe des unteren Rands 13a des Rahmens 13 ist. Beispielsweise kann der obere Rand 1a des Transportbehälters 1 im Beladezustand den unteren Rand 13a des Rahmens 13 berühren oder mittels eines Spalts von diesem beabstandet sein (z.B. können kleinere Spalte zwischen den Rändern 1a, 13a vorliegen). Zum Beispiel kann die Dicke des Spalts kleiner sein als die Dicke eines elastisches Elements 8, das durch den unteren Rand 13a des Rahmens 13 gebildet wird. Bevorzugt gehen die Seitenwände des Rahmens 13 nahtlos oder im Wesentlichen nahtlos in die Seitenwände des Transportbehälters 1 über. In dem Beladezustand ist der obere Rand 1a des Transportbehälters 1 derart an den unteren Rand 13a des Rahmens 13 anschließend, dass eine Oberfläche (z.B. Stirnfläche) des obere Rands 1a des Transportbehälters 1 einer Oberfläche (z.B. Stirnfläche) des unteren Rands 13a des Rahmens 13 gegenüber liegt.

Alternativ oder zusätzlich zur Anordnung der Ränder 1a, 13a voneinander in der Nähe kann der obere Rand 1a des Transportbehälters 1 in dem Beladezustand an den unteren Rand 13a des Rahmens 13 bzw. dessen Seitenflächen anschlagen, beispielsweise an das elastische Element 8 (vorzugsweise ein Dichtungselement), das durch den unteren Rand 13a des Rahmens 13 gebildet wird. Zum Beispiel kann dieses Anschlagen während der gesamten Dauer des Beladezustands anhalten oder aber nur teilweise während der Dauer des Beladezustands erfolgen, z. B. bevor der Spalt gebildet wird.

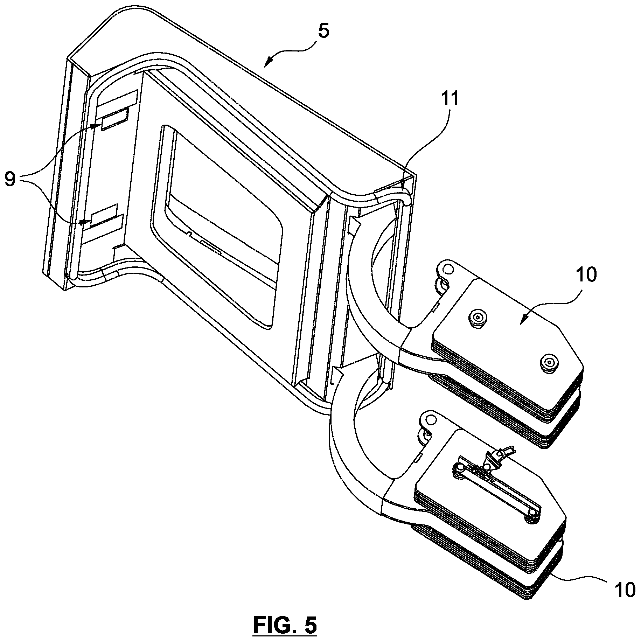

Figur 5 zeigt eine Abdeckung 5 einer erfindungsgemäßen Vorrichtung 20.

In der Abdeckung 5 sind eine oder mehrere (hier zwei oder mehr) Bildaufnahmeeinheiten 9 angebracht oder integriert sind, die ausgelegt sind, bei einer zumindest teilweise geöffneten Stellung der Abdeckung 5 des Behälters 6, eine an dem Gepäckstück 14 angebrachte Kennung (die das Gepäckstück und/oder den Passagier identifiziert) auszulesen. Die Kennung kann an einem Gepäckstück-Tag angebracht sein.

Die Abdeckung 5 ist ausgelegt, in jeder Stellung zwischen der geöffneten Stellung und der geschlossenen Stellung durch mindestens ein Gegengewicht 10 (hier zwei oder mehr) derart in sich selbst austariert zu sein, dass die Abdeckung 5 in der Stellung nicht selbständig öffnen oder schließen kann.

Die Abdeckung 5 weist einem Rand ein elastisches Mittel 11, wie eine Dichtung, auf, das ausgelegt ist, ein Quetschen eines Fingers eines Passagiers oder des Personals in der geschlossenen Stellung der Abdeckung 5 zu vermeiden.

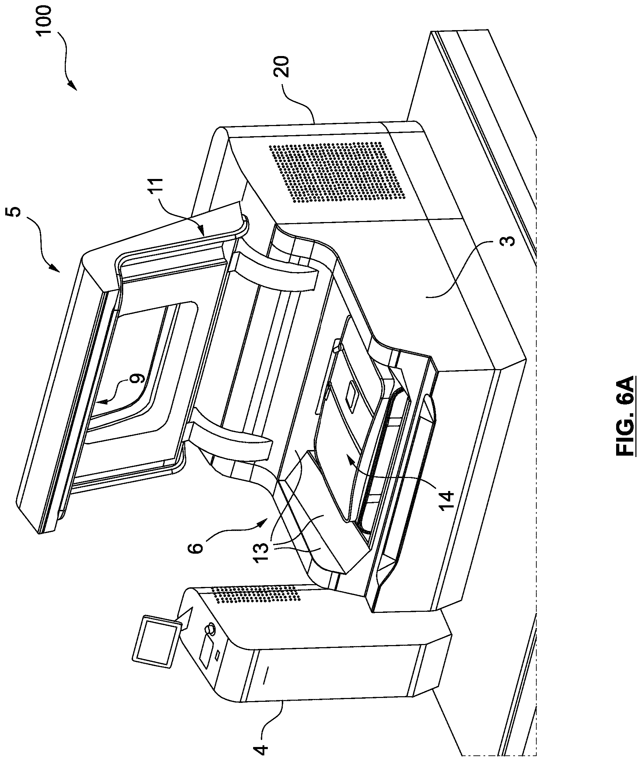

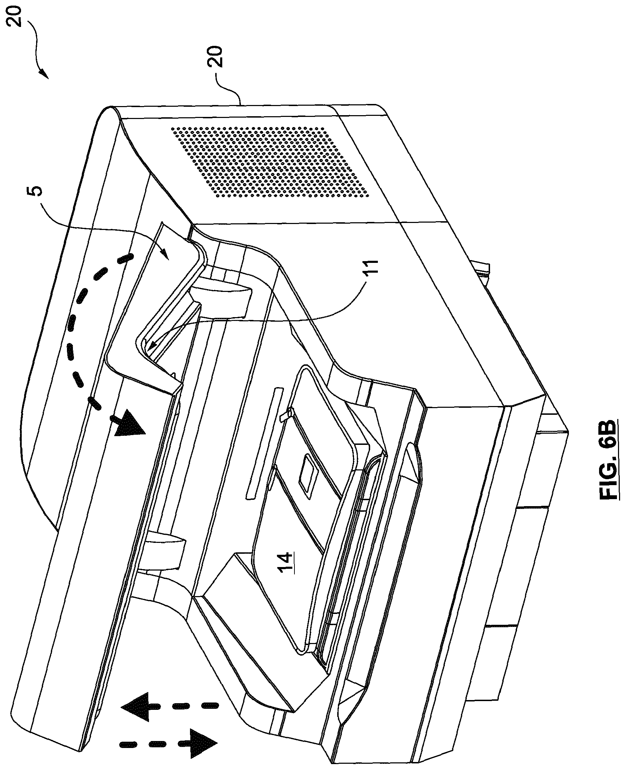

Figuren 6A, 6B und 7 zeigen einen Vorgang zur Aufgabe eines Gepäckstücks mittels des erfindungsgemäßen Gepäckaufgabeschalters 100.

In Figur 6A ist die Abdeckung 5 der Vorrichtung 20 in der geöffneten Stellung. Beispielsweise kann das Personal oder der Passagier mittels des Endgeräts 4 einen automatischen Vorgang anstoßen mit dem die Abdeckung 5 von der geschlossenen Stellung in die hier gezeigte geöffneten Stellung überführt wird. Es auch denkbar, dass der Passagier bzw. das Personal die Abdeckung 5 von der geschlossen Stellung in die geöffneten Stellung manuell überführt.

Der Transportbehälter 1 kann in dem Beladezustand des Behälters 6 ausgelegt sein, in einer vorbestimmten Position zu arretieren in der der oberer Rand 1a des Transportbehälters 1 an dem unteren Rand 13a des Rahmens 13 des Behälters 6 anschließt (vgl. Fig. 4), wobei die Abdeckung 5 ausschließlich von der geschlossenen Stellung in die geöffnete Stellung überführter ist, wenn der Transportbehälter 1 in der vorbestimmt Position arretiert ist. Andernfalls wird an dem Endgerät 4 eine Fehlermeldung ausgegeben.

Das Personal oder der Passagier kann bei geöffneter Stellung der Abdeckung 5 das Gepäckstück 14 in den Innenraum des Behälters 6 einführen, sofern das Gepäckstück 14 die maximal zulässigen Maße, insb. Länge und Breite, erfüllt. Auch kann an dieser Stelle mittels eines Sensors das Gewicht des Gepäckstücks gemessen werden. Die Abdeckung 5 kann sodann von der geöffneten Stellung aus Figur 6A in Richtung der geschlossenen Stellung, wie in Figur 7 gezeigt, überführt werden. Figur 6B zeigt hier eine Zwischenstellung der Abdeckung 5 zwischen der geöffneten Stellung und der geschlossen Stellung.

Das Schließen der Abdeckung 5 kann entweder automatisch mittels Betätigung an dem Endgerät 4 seitens des Personals oder Passagiers erfolgen oder aber manuell durch das Personal oder dem Passagier erfolgen, in dem händisch die Abdeckung 5 geschlossen wird.

Die Vorrichtung 20 kann einen Sensor umfassen, der ausgelegt ist, während des in Figur 6B gezeigten Vorgangs zum Wechseln der Abdeckung 5 von der geöffneten Stellung in Figur 6A in die geschlossene Stellung in Figur 7, einen Widerstand zu detektieren, um dadurch den Schließvorgang zu blockieren oder zu unterbrechen. Beispielsweise kann im Falle eines automatischen Schließens der Abdeckung 5 die Abdeckung 5 bei Detektieren des Widerstands angehalten werden oder aber automatisch wieder in die geöffnete Stellung überführt werden. Im Falle eines manuellen Schließens kann die Abdeckung 5 beispielsweise bei Detektieren des Widerstands blockiert werden und kann erst dann weiterbewegt werden, wenn der Widerstand nicht mehr detektiert wird.

Alternativ oder zusätzlich zu dem elastischen Mittel 11 an der Abdeckung 5 kann ein Mittel 12 an den Behälter, beispielsweise an dem oberen Rand 13b das Rands 13 angebracht sein (vgl. Fig. 7). In diesem Beispiel ist dieses Mittel ein Gegenanschlag 12, der sicherstellt, dass die Abdeckung 5 in der geschlossenen Stellung einen Spalt mit einer vorgegebenen Mindestgröße (zum Beispiel 20 mm, 30 mm oder 40 mm mindestens) frei lässt, sodass ggf. zwischen der Abdeckung 5 und dem oberen Rand 13b befindliche Finger des Passagiers bzw. des Personals nicht eingequetscht werden. Die Maße dieses Spalts können so dimensioniert sein, dass ein üblicher Finger nicht eingequetscht wird.

Das elastische Mittel 11 an der Abdeckung 5 kann ausgelegt sein, in der geschlossenen Stellung der Abdeckung 5 den Spalt zwischen der Abdeckung 5 und dem oberen Rand 13b des Rahmens 13 zumindest teilweise oder vollständig auszufüllen.

Die Vorrichtung 20 umfasst das Gehäuse 3 und der Transportbehälter 1 ist in dem Beladezustand des Behälters 6 zumindest teilweise oder vollständig von dem Gehäuse 3 der Vorrichtung 20 umschlossen, wie in Fig. 1B, 6A, 6B und 7 gezeigt.

Die Vorrichtung 20 kann einen Sensor (Waage) umfassen, der ausgelegt ist, ein Gewicht des in den Innenraum eingebrachten und durch den Transportbehälter 1 getragenen Gepäckstücks 14 zu bestimmen. Beispielsweise kann mit der Abdeckung 5 im geschlossenen Zustand, wie in Figur 7 gezeigt, das Gewicht des Gepäckstücks mit dem Sensor bestimmt werden, um sicherzustellen, dass das nun tatsächlich aufzugebende Gepäck die Anforderungen an das zulässige Gesamtgewicht erfüllt. Zusätzlich kann bei der geöffneten Stellung der Abdeckung 5, wie Figur 6A gezeigt, auch für den Passagier die Möglichkeit bestehen an dem Endgerät 4 das Gewicht das Gepäckstück 14, wie von dem Transportbehälter 1 aufgenommen, abzulesen, um ggf. Korrekturen am Gepäck vorzunehmen.

Wie in Figur 7 beispielhaft gezeigt, ist der Behälter 6 in dem Beladezustand derart ausgelegt, dass eine maximale Höhe des durch den Innenraum des Behälters 6 aufnehmbaren Gepäckstücks 14 zumindest durch die Abdeckung 5 begrenzt. Die Abdeckung 5 kann ausschließlich dann in die geschlossene Stellung überführbar werden, wenn das durch den Innenraum aufgenommene Gepäckstück 14 die durch die Abdeckung 5 und den Behälter (6) bzw. Transportbehälter 1 begrenzte maximale Höhe, maximale Länge und maximale Breite jeweils unterschreitet. Die Vorrichtung 20 kann ausgelegt sein, die Abdeckung 5 in der geschlossenen Stellung zu arretieren.

Die Vorrichtung 20 umfasst eine Steuereinheit, die ausgelegt ist, vorzugsweise ausschließlich, bei geschlossener und/oder arretierter Stellung der Abdeckung 5 des Behälters 6 (vgl. Fig. 7) ein Freigabesignal zu generieren. In Reaktion auf das Detektieren des Freigabesignals wird der Behälter 6 von dem Beladezustand in den Entladezustand überführt, in dem das Gepäckstück 14 automatisch und für einen Passagier unzugänglich durch den Transportbehälter 1 mittels des Lifts aus dem Behälter 6 entladen wird und dem Flugzeug zugeführt wird.

Die hier beschriebene und/oder beanspruchte Erfindung kann (alternativ) durch folgende nummerierten Aspekte beschrieben werden:

### ASPEKTE

1. Eine Vorrichtung (20) zur Aufgabe eines Gepäckstücks (14), insbesondere eines Sondergepäckstücks (14), von Passagieren, die Vorrichtung (20) umfassend:
   einen Behälter (6), der Behälter (6) umfassend:
      einen Rahmen (13), der Seitenwände (7) des Behälters (6) bildet; und
      einen Transportbehälter (1), der ausgelegt ist, einen Boden des Behälters (6) zu bilden, wobei die durch den Rahmen (13) gebildeten Seitenwände (7) des Behälters (6) und der Transportbehälter (1) in einem Beladezustand des Behälters (6) einen Innenraum des Behälters (6) zur Aufnahme des Gepäckstücks (14) abgrenzen;
   wobei der Behälter (6) von dem Beladezustand in einen Entladezustand überführbar ist, in dem das Gepäckstück (14) mittels des Transportbehälters aus dem Behälter (6) entladbar ist;
   dadurch gekennzeichnet, dass
   der Behälter (6) in dem Beladezustand derart ausgelegt ist, dass sich ein oberer Rand (1a) des Transportbehälters (1) an einen unteren Rand (13a) des Rahmens (13) anschließt.
2. Die Vorrichtung (20) nach Aspekt 1, dadurch gekennzeichnet, dass sich in dem Beladezustand der obere Rand (1a) des Transportbehälters (1) derart an den unteren Rand (13a) des Rahmens (13) anschließt, dass der obere Rand (1a) des Transportbehälters (1) in der Nähe des unteren Rands (13a) des Rahmens (13) ist und/oder an den unteren Rand (13a) des Rahmens (13) anschlägt.
3. Die Vorrichtung (20) nach Aspekt 1 oder 2, dadurch gekennzeichnet, dass sich in dem Beladezustand der obere Rand (1a) des Transportbehälters (1) derart an den unteren Rand (13a) des Rahmens (13) anschließt, dass eine Oberfläche des oberen Rands (1a) des Transportbehälters einer Oberfläche des unteren Rands (13a) des Rahmens (13) gegenüber liegt.
4. Die Vorrichtung (20) nach irgendeinem der vorangehen Aspekte, dadurch gekennzeichnet, dass der Behälter (6) in dem Beladezustand derart ausgelegt ist, dass eine maximale Länge und/oder Breite des durch den Innenraum aufnehmbaren Gepäckstücks (14) zumindest durch ein oder mehrere Seitenwände (1b) des Transportbehälters (1) definiert werden.
5. Die Vorrichtung (20) nach irgendeinem der vorangehen Aspekte, dadurch gekennzeichnet, dass der Behälter (6) in dem Beladezustand derart ausgelegt ist, dass die maximale Länge und/oder Breite des durch den Innenraum aufnehmbaren Gepäckstücks (14) durch ein oder mehrere der durch den Rahmen (13) gebildeten Seitenwände (7) des Behälters (6) begrenzt werden.
6. Die Vorrichtung (20) nach irgendeinem der vorhandenen Aspekte 2 bis 5, dadurch gekennzeichnet, dass der untere Rand (13a) des Rahmens (13) ein elastisches Element (8), vorzugsweise ein Dichtungselement, aufweist, an dem der obere Rand (1a) des Transportbehälters (1) im Beladezustand anschlägt.
7. Die Vorrichtung (20) nach irgendeinem der vorhandenen Aspekte, dadurch gekennzeichnet, dass die Vorrichtung (20) ferner umfasst:
   eine mit dem Behälter (6) verbundene Abdeckung (5) des Behälters (6), wobei die Abdeckung (5) ausgelegt ist, zwischen einer den Innenraum zugänglich machenden geöffneten Stellung und einer den Innenraum blockierenden geschlossen Stellung zu wechseln.
8. Die Vorrichtung (20) nach irgendeinem der vorhandenen Aspekte, dadurch gekennzeichnet, dass in der Abdeckung (5) eine oder mehrere Bildaufnahmeeinheiten (9) angebracht oder integriert sind, die ausgelegt sind, bei einer zumindest teilweise geöffneten Stellung der Abdeckung (5) des Behälters (6), eine an dem Gepäckstück (14) angebrachte Kennung auszulesen.
9. Die Vorrichtung (20) nach irgendeinem der vorangehenden Aspekte 7 bis 8, dadurch gekennzeichnet, dass die Abdeckung (5) ausgelegt ist, in jeder Stellung zwischen der geöffneten Stellung und der geschlossenen Stellung durch mindestens ein Gegengewicht (10) derart in sich selbst austariert zu sein, dass die Abdeckung (5) in der Stellung nicht selbständig öffnen oder schließen kann.
10. Die Vorrichtung (20) nach irgendeinen der vorangehenden Aspekte 7 bis 9, dadurch gekennzeichnet, dass die Abdeckung (5) und/oder der Rahmen (13) ein oder mehrere Mittel (11, 12) aufweisen, die ausgelegt sind, ein Quetschen eines Fingers in der geschlossenen Stellung der Abdeckung (5) zu vermeiden.
11. Die Vorrichtung (20) nach Aspekt 10, dadurch gekennzeichnet, dass die ein oder mehrere Mittel ein an der Abdeckung (5) angebrachtes elastisches Mittel (11), vorzugsweise eine Dichtung, und/oder ein an dem Rahmen (13) angebrachter Gegenanschlag (12) für die Abdeckung (5) umfassen.
12. Die Vorrichtung (20) nach Aspekt 11, dadurch gekennzeichnet, dass der Gegenanschlag (12) ausgelegt ist, in der geschlossenen Stellung der Abdeckung (5) gegen die Abdeckung (5) anzuschlagen und dadurch einen vorbestimmten Mindestabstand zwischen der Abdeckung (5) und einem oberen Rand (13b) des Rahmens (13) herzustellen.
13. Die Vorrichtung (20) nach Aspekt 11 oder 12, dadurch gekennzeichnet, dass das elastische Mittel (11, 12) an der Abdeckung (5) ausgelegt ist, in der geschlossenen Stellung der Abdeckung (5) einen Spalt zwischen der Abdeckung (5) und einem oberen Rand (13b) des Rahmens (13) zumindest teilweise oder vollständig auszufüllen.
14. Die Vorrichtung (20) nach irgendeinem der vorangehenden Aspekte 7 bis 13, dadurch gekennzeichnet, dass die Vorrichtung (20) ferner einen Sensor umfasst, der ausgelegt ist, während eines Vorgangs zum Wechseln der Abdeckung (5) von der geöffneten Stellung in die geschlossene Stellung einen Widerstand zu detektieren, um dadurch den Vorgang zu blockieren oder zu unterbrechen.
15. Die Vorrichtung (20) nach irgendeinem der vorangehenden Aspekte, dadurch gekennzeichnet, dass die Vorrichtung (20) ein Gehäuse (3) umfasst und der Transportbehälter (1) in dem Beladezustand des Behälters (6) zumindest teilweise oder vollständig von dem Gehäuse (3) der Vorrichtung (20) umschlossen wird.
16. Die Vorrichtung (20) nach irgendeinem der vorangehenden Aspekte, dadurch gekennzeichnet, dass der Transportbehälter (1) in dem Beladezustand des Behälters (6) ausgelegt ist, in einer vorbestimmten Position zu arretieren in der der oberer Rand (1a) des Transportbehälters (1) an dem unteren Rand (13a) des Rahmens (13) des Behälters (6) anschließt, vorzugsweise wobei die Abdeckung (5) ausschließlich von der geschlossenen Stellung in die geöffnete Stellung überführter ist, wenn der Transportbehälter (1) in der vorbestimmt Position arretiert ist.
17. Die Vorrichtung (20) nach irgendeinem der vorangehenden Aspekte, dadurch gekennzeichnet, dass die Vorrichtung (20) ferner einen Sensor umfasst, der ausgelegt ist, ein Gewicht des in den Innenraum eingebrachten und durch den Transportbehälter (1) getragenen Gepäckstücks (14) zu bestimmen.
18. Die Vorrichtung (20) nach irgendeinem der vorangehenden Aspekte 7 bis 17, dadurch gekennzeichnet, dass der Behälter (6) in dem Beladezustand derart ausgelegt ist, dass eine maximale Höhe des durch den Innenraum aufnehmbaren Gepäckstücks (14) zumindest durch die Abdeckung (5) begrenzt wird.
19. Die Vorrichtung (20) nach Aspekt 18, dadurch gekennzeichnet, dass die Abdeckung (5) ausschließlich dann in die geschlossene Stellung überführbar ist, wenn das durch den Innenraum aufgenommene Gepäckstück (14) die durch die Abdeckung (5) und den Behälter (6) begrenzte maximale Höhe, maximale Länge und maximale Breite jeweils unterschreitet.
20. Die Vorrichtung (20) nach irgendeinem der vorangehen Aspekte 7 bis 19, dadurch gekennzeichnet, dass die Vorrichtung (20) ausgelegt ist, die Abdeckung (5) in der geschlossenen Stellung zu arretieren.
21. Die Vorrichtung (20) nach irgendeinem der vorangehen Aspekte 7 bis 20, dadurch gekennzeichnet, dass, die Vorrichtung (20) eine Steuereinheit umfasst, die ausgelegt ist, vorzugsweise ausschließlich, bei geschlossener und/oder arretierter Stellung der Abdeckung (5) des Behälters (6) ein Freigabesignal zu generieren, um den Behälter (6) von dem Beladezustand in den Entladezustand überführbar zu machen, in dem das Gepäckstück (14) automatisch und vorzugsweise für einen Passagier unzugänglich durch den Transportbehälter (1) aus dem Behälter (6) entladbar ist.
22. Ein Gepäckaufgabeschalter (100), insbesondere zur Selbstbedienung, umfassend:
   die Vorrichtung (20) nach irgendeinen der vorangehenden Aspekte;
   ein durch Bedienpersonal oder einen Passagier bedienbares Endgerät (4) zur Steuerung der Vorrichtung (20).
23. Verfahren zur Aufgabe eines Gepäckstücks (14), insbesondere eines Sondergepäckstücks (14), eines Passagiers, insbesondere an einem Flughafen, unter Verwendung der Vorrichtung (20) oder des Schalters nach irgendeinem der vorangehenden Aspekte, gekennzeichnet durch:
   Aufnehmen des Gepäckstücks (14) in dem Innenraum des Behälters (6) im Beladezustand des Behälters (6);
   in Reaktion auf ein Detektieren eines Freigabesignals, Überführen des Behälters (6) von dem Beladezustand in den Entladezustand, in dem sich der obere Rand (1a) des Transportbehälters (1) von dem unteren Rand (13a) des Rahmens (13) entfernt und das Gepäckstück (14) mittels des Transportbehälters aus dem Behälter (6) entladen wird.

Durch die hier beschriebenen Mittel einzeln und in Kombination können Mittel bereitgestellt werden, die eine kompaktere Vorrichtung zur Gepäckaufgabe ermöglichen und zudem einen verlässlicheren Abtransport des Gepäckstücks mit dem Transportbehälter ermöglichen.

In der Beschreibung und in den Figuren sind bevorzugte Ausführungsformen der durch die beigefügten Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

## Patentansprüche

1. Eine Vorrichtung (20) zur Aufgabe eines Gepäckstücks (14), insbesondere eines Sondergepäckstücks (14), von Passagieren, die Vorrichtung (20) umfassend:
einen Behälter (6), der Behälter (6) umfassend:
einen Rahmen (13), der Seitenwände (7) des Behälters (6) bildet; und
einen Transportbehälter (1), der ausgelegt ist, einen Boden des Behälters (6) zu bilden, wobei die durch den Rahmen (13) gebildeten Seitenwände (7) des Behälters (6) und der Transportbehälter (1) in einem Beladezustand des Behälters (6) einen Innenraum des Behälters (6) zur Aufnahme des
Gepäckstücks (14) abgrenzen;
wobei der Behälter (6) von dem Beladezustand in einen Entladezustand überführbar ist, in dem das Gepäckstück (14) mittels des Transportbehälters aus dem Behälter (6) entladbar ist;
**dadurch gekennzeichnet, dass**
der Behälter (6) in dem Beladezustand derart ausgelegt ist, dass sich ein oberer Rand (1a) des Transportbehälters (1) an einen unteren Rand (13a) des Rahmens (13) anschließt.

2. Die Vorrichtung (20) nach Anspruch 1, **dadurch gekennzeichnet, dass** sich in dem Beladezustand der obere Rand (1a) des Transportbehälters (1) derart an den unteren Rand (13a) des Rahmens (13) anschließt, dass der obere Rand (1a) des Transportbehälters (1) in der Nähe des unteren Rands (13a) des Rahmens (13) ist und/oder an den unteren Rand (13a) des Rahmens (13) anschlägt, und/oder
**dadurch gekennzeichnet, dass** sich in dem Beladezustand der obere Rand (1a) des Transportbehälters (1) derart an den unteren Rand (13a) des Rahmens (13) anschließt, dass eine Oberfläche des oberen Rands (1a) des Transportbehälters einer Oberfläche des unteren Rands (13a) des Rahmens (13) gegenüber liegt.

3. Die Vorrichtung (20) nach irgendeinem der vorangehen Ansprüche, **dadurch gekennzeichnet, dass** der Behälter (6) in dem Beladezustand derart ausgelegt ist, dass eine maximale Länge und/oder Breite des durch den Innenraum aufnehmbaren Gepäckstücks (14) zumindest durch ein oder mehrere Seitenwände (1b) des Transportbehälters (1) definiert werden, und/oder
**dadurch gekennzeichnet, dass** der Behälter (6) in dem Beladezustand derart ausgelegt ist, dass die maximale Länge und/oder Breite des durch den Innenraum aufnehmbaren Gepäckstücks (14) durch ein oder mehrere der durch den Rahmen (13) gebildeten Seitenwände (7) des Behälters (6) begrenzt werden.

4. Die Vorrichtung (20) nach irgendeinem der vorhandenen Ansprüche 1 bis 3, **dadurch gekennzeichnet, dass** der untere Rand (13a) des Rahmens (13) ein elastisches Element (8), vorzugsweise ein Dichtungselement, aufweist, an dem der obere Rand (1a) des Transportbehälters (1) im Beladezustand anschlägt.

5. Die Vorrichtung (20) nach irgendeinem der vorhandenen Ansprüche, **dadurch gekennzeichnet, dass** die Vorrichtung (20) ferner umfasst:
eine mit dem Behälter (6) verbundene Abdeckung (5) des Behälters (6), wobei die Abdeckung (5) ausgelegt ist, zwischen einer den Innenraum zugänglich machenden geöffneten Stellung und einer den Innenraum blockierenden geschlossen Stellung zu wechseln.

6. Die Vorrichtung (20) nach Anspruch 5, **dadurch gekennzeichnet, dass** in der Abdeckung (5) eine oder mehrere Bildaufnahmeeinheiten (9) angebracht oder integriert sind, die ausgelegt sind, bei einer zumindest teilweise geöffneten Stellung der Abdeckung (5) des Behälters (6), eine an dem Gepäckstück (14) angebrachte Kennung auszulesen.

7. Die Vorrichtung (20) nach Anspruch 5 oder 6, **dadurch gekennzeichnet, dass** die Abdeckung (5) ausgelegt ist, in jeder Stellung zwischen der geöffneten Stellung und der geschlossenen Stellung durch mindestens ein Gegengewicht (10) derart in sich selbst austariert zu sein, dass die Abdeckung (5) in der Stellung nicht selbständig öffnen oder schließen kann.

8. Die Vorrichtung (20) nach irgendeinen der vorangehenden Ansprüche 5 bis 7, **dadurch gekennzeichnet, dass** die Abdeckung (5) und/oder der Rahmen (13) ein oder mehrere Mittel (11, 12) aufweisen, die ausgelegt sind, ein Quetschen eines Fingers in der geschlossenen Stellung der Abdeckung (5) zu vermeiden.

9. Die Vorrichtung (20) nach Anspruch 8, **dadurch gekennzeichnet, dass** die ein oder mehrere Mittel ein an der Abdeckung (5) angebrachtes elastisches Mittel (11), vorzugsweise eine Dichtung, und/oder ein an dem Rahmen (13) angebrachter Gegenanschlag (12) für die Abdeckung (5) umfassen, vorzugsweise: **dadurch gekennzeichnet, dass** der Gegenanschlag (12) ausgelegt ist, in der geschlossenen Stellung der Abdeckung (5) gegen die Abdeckung (5) anzuschlagen und dadurch einen vorbestimmten Mindestabstand zwischen der Abdeckung (5) und einem oberen Rand (13b) des Rahmens (13) herzustellen, und/oder
**dadurch gekennzeichnet, dass** das elastische Mittel (11, 12) an der Abdeckung (5) ausgelegt ist, in der geschlossenen Stellung der Abdeckung (5) einen Spalt zwischen der Abdeckung (5) und einem oberen Rand (13b) des Rahmens (13) zumindest teilweise oder vollständig auszufüllen.

10. Die Vorrichtung (20) nach irgendeinem der vorangehenden Ansprüche 5 bis 9, **dadurch gekennzeichnet, dass** die Vorrichtung (20) ferner einen Sensor umfasst, der ausgelegt ist, während eines Vorgangs zum Wechseln der Abdeckung (5) von der geöffneten Stellung in die geschlossene Stellung einen Widerstand zu detektieren, um dadurch den Vorgang zu blockieren oder zu unterbrechen.

11. Die Vorrichtung (20) nach irgendeinem der vorangehenden Ansprüche, **dadurch gekennzeichnet, dass** der Transportbehälter (1) in dem Beladezustand des Behälters (6) ausgelegt ist, in einer vorbestimmten Position zu arretieren in der der oberer Rand (1a) des Transportbehälters (1) an dem unteren Rand (13a) des Rahmens (13) des Behälters (6) anschließt, vorzugsweise wobei die Abdeckung (5) ausschließlich von der geschlossenen Stellung in die geöffnete Stellung überführter ist, wenn der Transportbehälter (1) in der vorbestimmt Position arretiert ist.

12. Die Vorrichtung (20) nach irgendeinem der vorangehenden Ansprüche 5 bis 11, **dadurch gekennzeichnet, dass** der Behälter (6) in dem Beladezustand derart ausgelegt ist, dass eine maximale Höhe des durch den Innenraum aufnehmbaren Gepäckstücks (14) zumindest durch die Abdeckung (5) begrenzt wird, vorzugsweise **dadurch gekennzeichnet, dass** die Abdeckung (5) ausschließlich dann in die geschlossene Stellung überführbar ist, wenn das durch den Innenraum aufgenommene Gepäckstück (14) die durch die Abdeckung (5) und den Behälter (6) begrenzte maximale Höhe, maximale Länge und maximale Breite jeweils unterschreitet.

13. Die Vorrichtung (20) nach irgendeinem der vorangehen Ansprüche 5 bis 12, **dadurch gekennzeichnet, dass**, die Vorrichtung (20) eine Steuereinheit umfasst, die ausgelegt ist, vorzugsweise ausschließlich, bei geschlossener und/oder arretierter Stellung der Abdeckung (5) des Behälters (6) ein Freigabesignal zu generieren, um den Behälter (6) von dem Beladezustand in den Entladezustand überführbar zu machen, in dem das Gepäckstück (14) automatisch und vorzugsweise für einen Passagier unzugänglich durch den Transportbehälter (1) aus dem Behälter (6) entladbar ist.

14. Ein Gepäckaufgabeschalter (100), insbesondere zur Selbstbedienung, umfassend:
die Vorrichtung (20) nach irgendeinen der vorangehenden Ansprüche;
ein durch Bedienpersonal oder einen Passagier bedienbares Endgerät (4) zur Steuerung der Vorrichtung (20).

15. Verfahren zur Aufgabe eines Gepäckstücks (14), insbesondere eines Sondergepäckstücks (14), eines Passagiers, insbesondere an einem Flughafen, unter Verwendung der Vorrichtung (20) nach irgendeinem der vorangehenden Ansprüche 1 bis 13 oder des Gepäckaufgabeschalters nach Anspruch 14, **gekennzeichnet durch**:
Aufnehmen des Gepäckstücks (14) in dem Innenraum des Behälters (6) im Beladezustand des Behälters (6);
in Reaktion auf ein Detektieren eines Freigabesignals, Überführen des Behälters (6) von dem Beladezustand in den Entladezustand, in dem sich der obere Rand (1a) des Transportbehälters (1) von dem unteren Rand (13a) des Rahmens (13) entfernt und das Gepäckstück (14) mittels des Transportbehälters aus dem Behälter (6) entladen wird.
